# EUROPÄISCHE PATENTSCHRIFT

(11) **EP 0 401 328 B1**
(45) Veröffentlichungstag und Bekanntmachung des Hinweises auf die Patenterteilung: **22.09.1993**
(21) Anmeldenummer: 90900010.1
(22) Anmeldetag: 20.12.1989
(51) Int. Cl.: G01C 9/06, E02F 9/26

(54) **EIN NEIGUNGSMESSSYSTEM FÜR SCHLITZWÄNDE**
METHOD OF MEASURING THE ANGLE OF INCLINATION OF TRENCH WALLS
SYSTEME DE MESURE DE L'INCLINAISON POUR PAROIS MOULEES DANS LE SOL

(30) Priorität: 20.12.1988 AT 3097/88
(43) Veröffentlichungstag der Anmeldung: 12.12.1990
(73) Patentinhaber: UNIVERSALE GRUNDBAUGESELLSCHAFT M.B.H., A-1010 Wien (AT); BAUER SPEZIALTIEFBAU GESELLSCHAFT M.B.H., A-1110 Wien (AT); Neue Reformbau Aktiengesellschaft, A-1091 Wien (AT)
(72) Erfinder: VORLICEK, Karl, A-1200 Wien (AT); HAUSER, Hans, Dipl.-Ing. Dr., A-1160 Wien (AT)
(74) Vertreter: Köhler-Pavlik, Johann, Dipl.-Ing.
(86) Internationale Anmeldenummer: AT8900124
(87) Internationale Veröffentlichungsnummer: WO9007098

(56) Entgegenhaltungen:
- WO-A-81/02904
- DE-A- 2 525 698
- PATENT ABSTRACT OF JAPAN, vol. 11, no. 126, (P-569)(2573), 21 April 1987, & JP-A-612 706 11 (MATSUSHITA ELECTRIC WORKS LTD.), 29 November 1986

## Beschreibung

Die Erfindung betrifft ein Verfahren zur Erfassung des Verlaufes von Grabungen gegenüber dem Lot in Abhängigkeit von der Grabungstiefe, insbesondere für Schlitzwände, wobei zur Messung der Neigung ein herkömmlicher Winkel- oder Inklinationssensor verwendet wird, sowie ein Meßsystem dafür.

Bisherige Neigungswinkelmeßsysteme verwenden handelsübliche Winkelsensoren, beispielsweise Beschleunigungsaufnehmer, Meßkapseln mit Auftriebskörpern oder mechanischen Pendelmechanismen. Die Sensoren samt zugehöriger Elektronik sind in einem Gehäuse eingebaut, dessen Breite der kleinsten Dimension der Grabung, im speziellen Fall der Schlitzwandbreite, entspricht. Auf diesem Weg kann der Schachtverlauf durch Absenken des Gehäuses ermittelt werden. Eine Abtastung der Schachtwände und damit des Schachtverlaufes kann aber auch durch Ultraschallpeilung erfolgen. Die Meßdatenübertragung erfolgt dabei über ein mehrpoliges Stromkabel. Ein solches Neigungswinkelmeßsystem ist aus der DE-A- 25 25 698 bekannt.

Der Nachteil der herkömmlichen Geräte liegt unter anderem darin, daß die Grabungen erst im Nachhinein vermessen werden können, wozu überdies speziell geschultes Personal benötigt wird, und somit Maßnahmen zum Ausgleich intolerabler Abweichungen unter Zeit-, Material- und damit wirtschaftlicher Verlust erst nach dem durchgeführten Grabungsvorgang erfolgen können.

Die Aufgabe der vorliegenden Erfindung bestand daher in der Entwicklung eines Verfahrens, welches diese Nachteile vermeidet und die Überwachung während der Durchführung der Grabungsarbeiten ohne zusätzliches Personal und übermäßigem apparativen Aufwand ermöglicht.

Eine weitere Aufgabe war die Konstruktion eines Meßsystems zur Durchführung des Verfahrens in Verbindung mit einem Grabwerkzeug, das über ein oder mehrere Verbindungselemente, beispielsweise Drahtseile oder Gestände, beweglich mit einem Grundgerät verbunden ist und zumindest einen herkömmlichen Winkel- oder Inklinationssensor und eine Auswerteelektronik mit einer analogen oder digitalen Anzeige, allenfalls mit einer Speichereinrichtung, umfaßt.

Die Aufgabe wird gemäß Anspruch 1 dadurch gelöst, daß der besagte Sensor zusammen mit einer elektronischen Schaltung zur Erzeugung eines Hochfrequenzsignals stoßgeschützt am Grabwerkzeug befestig wird, wobei während der Grabungsarbeiten ein hochfrequentes Signal mit einer dem Ausgangssignal des Sensors proportionalen Frequenz erzeugt und einer Spule zugeleitet wird, welche eines der Verbindungselemente, wie beispielsweise das Trag- oder Betätigungsseil des Grabwerkzeuges, zwischen Grabwerkzeug und Grundgerät umfaßt, sodaß das Hochfrequenzsignal berührungslos in das Verbindungselement eingespeist wird, daß das Signal von einer zweiten Spule, die das von der ersten Spule umfaßte Verbindungselement ebenfalls umfaßt, in gleicher Weise berührungslos abgenommen und einer Auswerteelektronik zugeleitet und wieder in ein, die Neigung des Grabwerkzeuges repräsentierenden Spannungswert umgewandelt und analog und/oder digital angezeigt wird.

Gemäß einem weiteren Merkmal ist vorgesehen, daß der Auswerteelektronik von zumindest einem weiteren Sensor Signale zugeleitet werden, welche der jeweiligen ausgefahrenen Länge des oder der Verbindungselemente und damit auch der Grabungstiefe proportional sind.

Das System zur Durchführung des Verfahrens ist gemäß Anspruch 6 dadurch gekennzeichnet, daß der oder die Winkelsensoren zusammen mit einer elektronischen Schaltung, die ein hochfrequentes Signal mit einer dem neigungsproportionalen Ausgangssignal des Sensors proportionalen Frequenz erzeugt, in einem druckfesten und wasserdichten Gehäuse stoßgeschützt eingebaut sind und das Gehäuse direkt am Grabwerkzeug montiert ist, daß am oder im Grabwerkzeug eine mit der elektronischen Schaltung verbundene und eines der Verbindungselemente umfassende Spule angebracht ist, welcher das Hochfrequenzsignal zugeleitet wird, daß am Grundgerät eine zweite Spule zur Abnahme des über das Verbindungselement übertragenen Hochfrequenzsignals vorgesehen ist, die das von der ersten Spule umfaßte Verbindungselement ebenfalls umfaßt und mit einer Auswerteelektronik und einer Anzeigeeinrichtung, vorzugsweise im Führerhaus des Grundgerätes angeordnet, verbunden ist, in der das in der Spule induzierte neigungsproportionale Hochfrequenzsignal in einen Spannungswert umgewandelt und auf der Anzeige ausgegeben wird.

Nach einem weiteren Merkmal ist das System dadurch gekennzeichnet, daß zumindest ein weiterer Sensor am Grundgerät vorgesehen ist, der ebenfalls mit der Auswerteelektronik verbunden ist, und Signale liefert, die der jeweiligen Länge des oder der Verbindungselemente und damit der Grabungstiefe proportional sind.

Dadurch ergeben sich gegenüber den bislang üblichen Verfahren zur Erfassung der Neigung von Grabungen folgende Vorteile:
Aufgrund der kabellosen Datenübertragung, bzw. der Ausnutzung vorhandener, vom Grabwerkzeug zum Grundgerät führende Elemente, kann ein zusätzlicher hubseil- oder gestängesynchroner Kabelaufrollmechanismus entfallen.

Durch die dauernde Befestigung des oder der Sensoren am Grabwerkzeug entfällt der zeitraubende Aufbau, die Justierung und die Demontage, wie sie für separate Meßsysteme erforderlich sind, sowie die Notwendigkeit für speziell geschultes Personal.

Vielmehr kann während der Grabungsarbeiten der Grabungsverlauf vom Bedienungspersonal, beispielsweise dem Baggerführer, des Gerätes beobachtet und allenfalls erforderliche Maßnahmen zur Korrektur intolerabler Abweichungen unverzüglich eingeleitet werden. Zusätzlich zur vornehmlich digitalen Anzeige im Führerstand kann durch Aufzeichnung eines Winkel-Tiefen-Diagrammes eine Dokumentation der Grabung angelegt werden, die eine genaue Analyse derselben erlaubt.

Weitere Vorteile und Merkmale der Erfindung sollen nun in der nachfogenden Beschreibung anhand einer beispielhaften Ausführung und unter Bezugnahme auf die Zeichnungen näher erläutert werden.

Es zeigen
- Fig. 1a und 1b: den Greifer eines Baggers für Schlitzwandgrabungen mit dem montierten Sensorgehäuse,
- Fig. 2: schematish eine Variante für die stoßgeschützte Montage des Sensors im Gehäuse,
- Fig. 3: ein Winkel-Spannungsdiagramm eines herkömmlichen Neigungssensors,
- Fig. 4a: ein Schema für eine erste Ausführungsform des Signalübertragungssytems gemäß der Erfindung,
- Fig. 4b: ein Ersatzschaltbild davon,
- Fig. 5: einen Teil des Signalübertragungssystems gemäß einer zweiten erfindungsgemäßen Variante,
- Fig. 6a und 6b: ein Beispiel einer Vorrichtung zur Feststellung der Grabungstiefe, und
- Fig. 7: ein Blockdiagramm des erfindungsgemäßen Gesamtsystems zur Erfassung der Neigung von Grabungen.

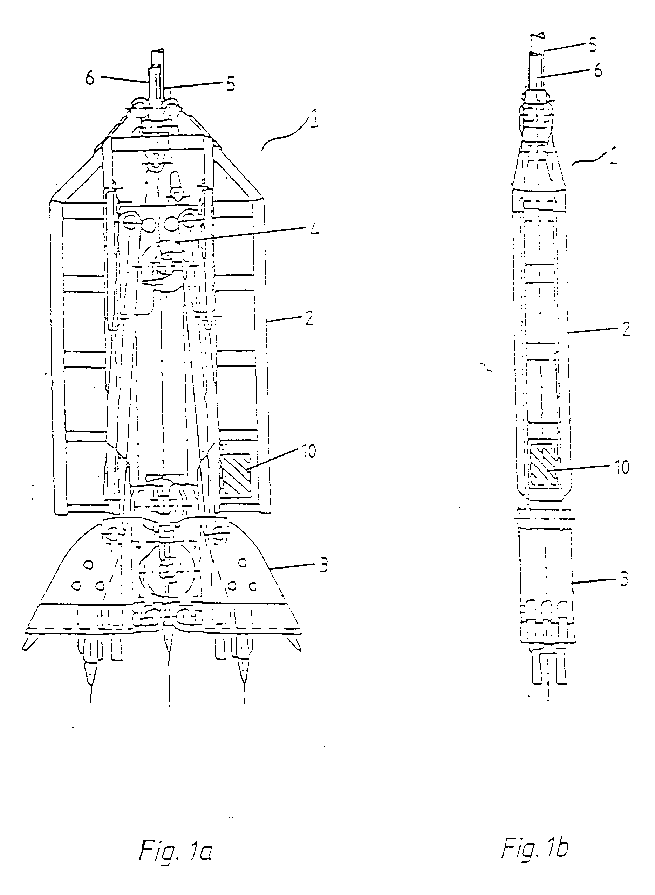

In Fig. 1a und 1b ist mit 1 der Greifer eines Baggers für Schlitzwandgrabungen bezeichnet, welcher hier beispielhaft für Grabwerkzeuge beliebiger Art zur Durchführung von Grabungen aller Art steht. Am unteren Ende eines Rahmens 2 ist ein schließbare Schaufeleinrichtung 3 angebracht, welche mittels eines herkömmlichen vom Grundgerät aus bedienbaren Mechanismus 4 geöffnet und geschlossen werden kann. Der Greifer 1 kann über ein Tragseil abgesenkt oder angehoben werden, und der Mechanismus 4 wird vorzugsweise gleichfalls mittels eines Betätigungsseiles 6 vom Bagger aus gesteuert.

Zur Messung der Neigung dient ein herkömmlicher handelsüblicher Winkel- oder Inklinationssensor, welcher in einem wasserdichten, druckfesten Gehäuse 10 direkt am Greifer montiert ist. Das Gehäuse befindet sich dabei vorzugsweise innerhalb das Rahmens 2, wo es am besten vor Beschädigungen geschützt ist.

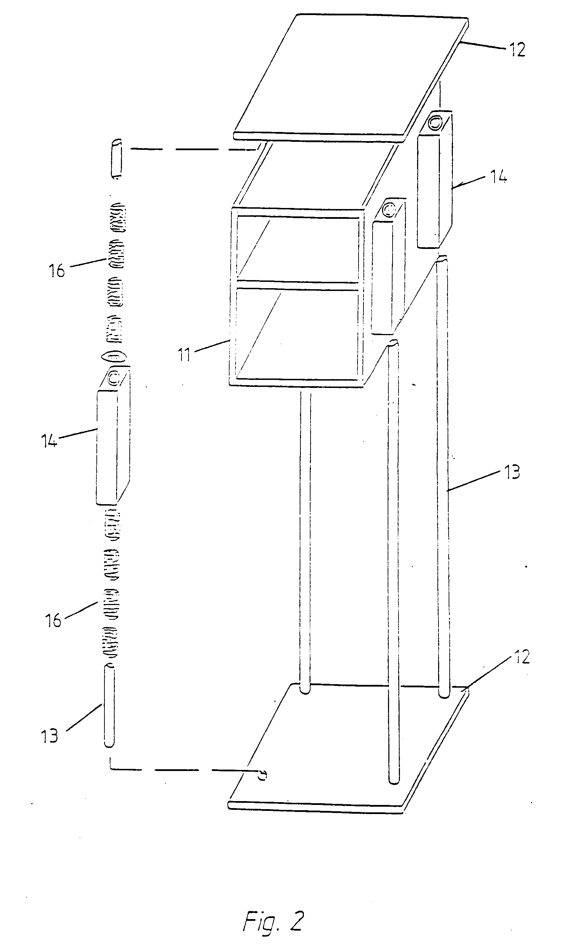

Die Schockdämpfung wir z.B. wie in Fig. 2 gezeigt, durch ein gefedert geführtes Innengehäuse 11 und Aufpralldämmplatten 12 erreicht, welche im Gehäuse 10 montiert sind. Dazu sind zwischen den oberen und unteren Dämmplatten 12 eine oder mehrere Führungsstange(n) 13 vorgesehen, auf welchen das Innengehäuse 11 mittels im Prinzip beliebiger Führungselemente 14 gleitet. Oberhalb und unterhalb vor zumindest einem Führungselement 14, vorzugsweise bei allen, sind elastische Elemente, vorzugsweise Schraubenfedern 16 vorgesehen.

Gleitet nun der Greifer 1 in den Schacht, wobei die Greiferbreite der Schlitzwandbreite entspricht, so kann auf diesem Weg dessen Neigung in jedem Punkt seines Weges ermittelt werden. Durch eine entsprechende Justierung des Neigungssensors kann dieser so eingestellt werden, daß lediglich der Neigungswinkel in Richtung der Schachtbreite, d.h. normal auf die Ebene des Rahmens 2, registriert wird. Eine eventuelle Neigung des Greifers 1 in der Längsrichtung der Schachtgrabung hat somit keinen Einfluß auf das Meßergebnis.

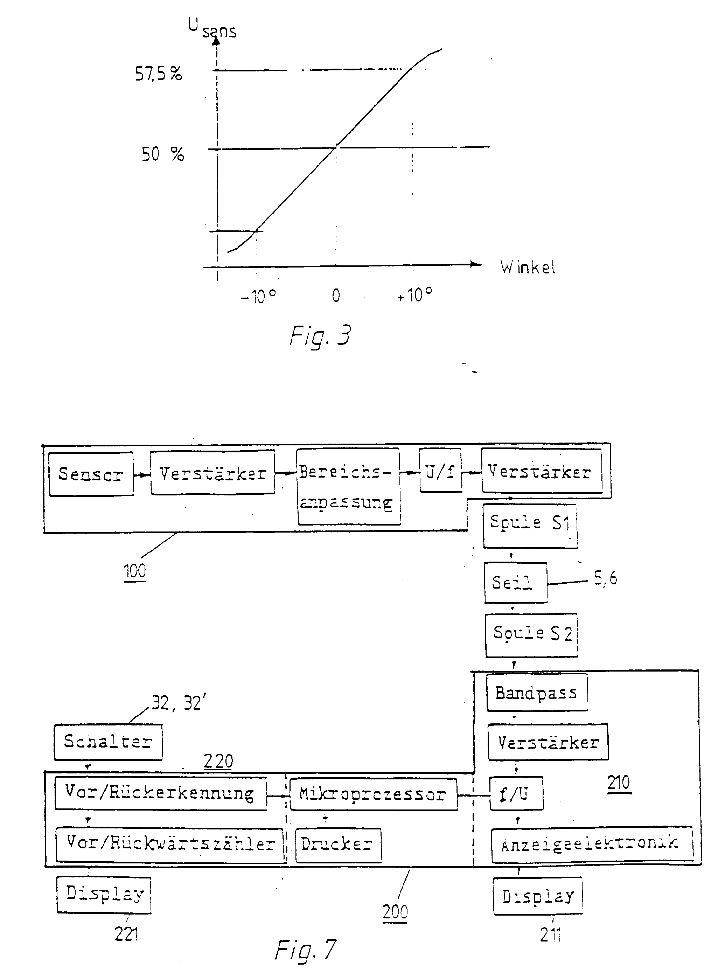

Der Neigungssensor liefert als Ausgangssignal eine Spannung, deren Wert der Neigung des Sensors gegenüber dem Lot proportional ist, wie z.B in Fig. 3 dargestellt. Dieses Ausgangssignal wird einer elektronischen Schaltung zugeführt, welche zusammen mit dem Sensor, gleichfalls stoßgeschützt, im Gehäuse 10 eingebaut ist. Die Schaltung erzeugt in herkömmlicher Weise unter Verwendung von Standard-Bauteilen ein hochfrequentes Signal, dessen Frequenz wieder der Ausgangsspannung des Neigungssensors und damit auch der Neigung des Greifers 1 proportional ist. Allenfalls kann der Spannung-Frequenz-Konvertierung noch eine Signalverstärkung und bzw. oder Spannungsbereich-Anpassung vorangehen, sowie eine Bandbegrenzung und bzw. oder weitere Verstärkung des erzeugten Hochfrequenzsignals erfolgen.

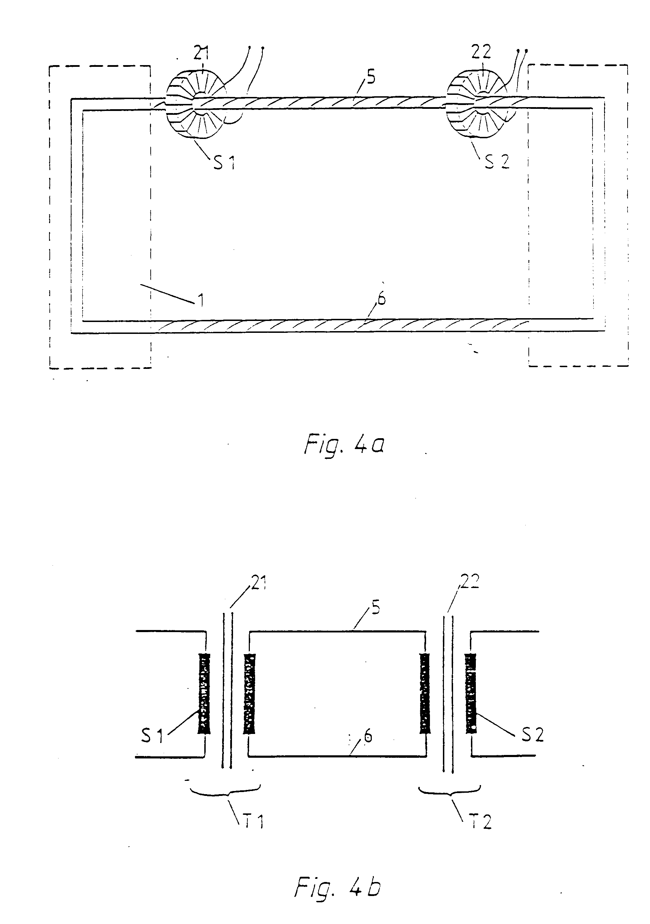

Das spannungs-frequenz-konvertierte, bandbegrenzte und an die Übertragungsbedingungen, d.h. die Länge der Übertragungsstrecke, die Materialien der Bauteile etc., angepaßte Inklinationssensorsignal wird anschließend nach einem der beiden folgenden Verfahren und mittels der dabei beschriebenen System in das Führerhaus des Baggers übertragen. Nach der ersten erfindungsgemäßen Variante (siehe Fig. 4a) wird das angepaßte neigungsproportionale Hochfrequenzsignal einer Spule S1 zugeführt, welche um einen Ringkern 21 gewickelt ist. Dieser Ringkern 21 umfaßt eines der Drahtseile 5 oder 6, welche den Greifer 1 mit dem Bagger verbinden. Das Hochfrequenzsignal in der Spule S1 induziert im Ringkern 21 ein wechselndes Magnetfeld, und dieses erzeugt seinerseits ein elektrisches Wechselfeld, dessen Feldlinien das Zentrum des Ringkernes 21 parallel zum Drahtseil 5 oder 6 und das jeweilige drahtsei 5 oder 6, durchsetzen. Der Ringkern 21 kann dabei wahlweise etwas oberhalb des Greifers 1 montiert sein, vorzugsweise ist er allerdings wegen der besseren Schutzmöglichkeiten gegen Beschädigungen noch innerhalb des Rahmens 2 befestigt. Um auch gegenüber Beeinträchtigungen aufgrund von Seilschwingungen vorzusorgen, ist der Ringkern 21 vorteilhafterweise mittels elastischer Elemente, vorzugsweise Federn (nicht dargestellt) am Greifer montiert.

Die beiden Drahtseile 5 und 6 sind elektrisch miteinander verbunden, da sie jeweils an stromleitenden Bauteilen des Baggers bzw. des Greifers 1 befestigt sind oder mit diesem in Kontakt stehen, welche auch direkt oder indirekt mit dem jeweils anderen Seil in Kontakt kommen. Daher fließt in den beiden vorhandenen Seilen 5 und 6 ein hochfrequenter Wechselstrom, der nun seinerseits in einem zweiten Ringkern 22, durch dessen Zentrum das auch vom ersten Rinkern 21 umfaßte Seil 5 oder 6 verläuft, ein wechselndes Magnetfeld hervorruft. Dieser zweite Ringkern 22 ist, analog dem zuvor beschriebenen, mit einer zweiten Spule S2 bewickelt und vorzugsweise ebenfalls gefedert am Bagger, d.h. nahe dem, dem Greifer 1 entgegengesetzten Ende der Seile, angebracht. Die Spule S2, in der vom wechselnden Magnetfeld eine Wechselspannung induziert wird, ist mit einer Auswerteelektronik verbunden, wo das vom Seil abgenommene neigungsproportionale Hochfrequenzsignal wieder in einen Spannungswert umgewandelt wird, welcher die Neigung des Grabungswerkzeuges repräsentiert und über beliebige herkömmliche Anzeigeeinrichtungen analog oder digital angezeigt werden kann.

Die genaue Position für die Anbringung des Ringkernes 22 und der Spule S2 am Bagger ist im Prinzip beliebig. Die güngstigste Stelle in Hinblick auf die Signalübertragung wäre möglichst nahe der ersten Spule 51, also ganz außen am Ausleger des Baggers, allenfalls noch etwas in Richtung Greifer 1 versetzt, biespielsweise auf einem vorzugsweise beweglich angebrachten Rahmen. Hier ist jedoch die mechanische Belastung, vor allem durch die Seilbewegungen besonders groß.

Diesbezüglich günstiger, wenngleich auch für die Signalübertragung etwas weniger vorteilhaft, ist eine Montage der Aufnehmerspule S2 zwischen dem äußersten Punkt am Ausleger und der Seiltrommel für die Drahtseile 5 und 6.

Fig. 4b zeigt ein Ersatzschaltbild für die soeben beschriebene Übertragungsvariante. Der Ringkern 21 ist hier der Kern eines ersten Transformators T1, dessen Primärspule die Spule S1 ist. Das durch den Kern laufende Seilstück 5 stellt eine halbe Windung der Sekundärseite des Transformators T1 und gleichzeitig auch an der Primärseite eines zweiten Transformators T2 dar. Der Transformator T2 umfaßt noch den Ringkern 22 und die Signalaufnehmerspule S2.

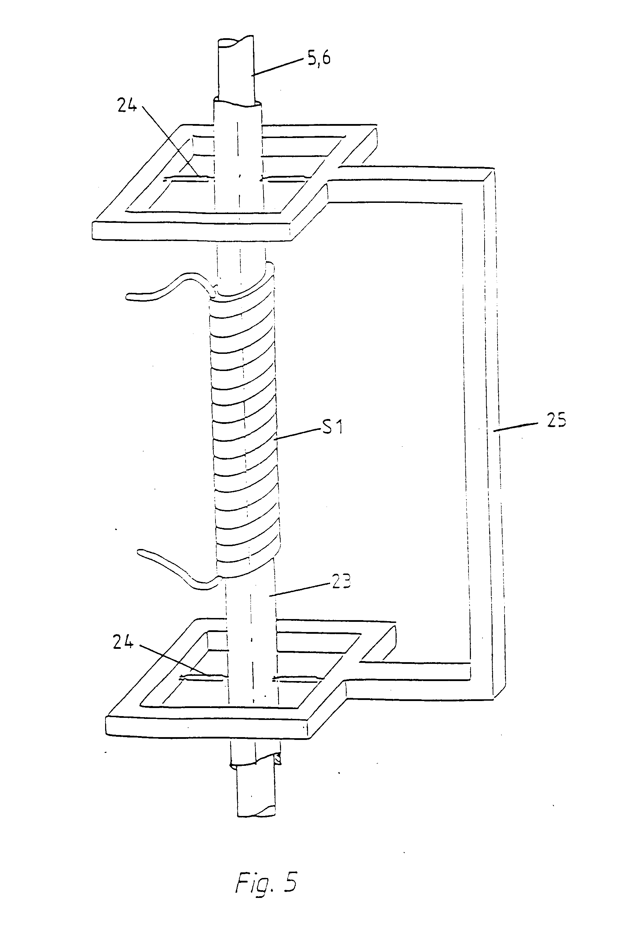

Die Signalübertragung nach der zweiten Variante gemäß der Erfindung erfolgt durch den magnetischen Fluß, und soll nun anhand der Fig. 5 erläutert werden.

Wiederum ist im oder am Greifer 1, nahe einem Ende eines der Seile 5 oder 6 ein Sendespule S1' vorgesehen, in welche das spannungsfrequenz-konvertierte, bandbegrenzte neigungsproportionale Hochfrequenzsignal eingespeist wird. Im Gegensatz zur ersten Variante ist die Spule S1' nicht um einen Ringkern gewickelt, sondern direkt um eines der beiden Drahtseile 5 oder 6. Die hochfrequenzte Wechselspannung induziert ein, das Seil durchsetzendes Magnetfeld, welches wiederum von einer analog aufgebauten Empfängerspule am Bagger vom Seil abgenommen wird.

Um den Streufluß zu minimieren, muß der Luftspalt zwischen Seil und Spule möglichst gering sein. Zur Vermeidung von Beschädigungen der Spulen bei zu enger Umwicklung der Seile 5 oder 6 sind die Windungen der Spulen, beispielsweise S1', um einen Spulenkörper 23 aus Polyamid- oder Polyolefinkunstsoff gelegt, wodurch geringe Reibung am durchlaufenden Seil sowie große Widerstandsfestigkeit erzielt wird. Natürlich können die Spulen auch mit den besagten Kunststoffen umhüllt sein.

Entsprechend dem oben beschriebenen Aufbau werden auch bei dieser Ausführungsform die Spulen bzw. Spulenkörper über Federn 24 am Greifer 1 der Baggers, allenfalls unter Zwischenschaltung eines Trägerrahmens 25 befestigt.

Die zuletzt beschriebene zweite Ausführungsvariante ist jedoch nur für ferromagnetische Seile 5,6 möglich, während sie für nicht ferromagnetische Werkstoffe, wie z.B. Drahtseile aus hoch kohlenstofflegierten Stählen nicht gangbar ist.

Die Frequenz des übertragenen Signales kann zwischen 500 Hz und 35 kHz liegen, wobei die Mittenfrequenz vorzugsweise bei etwa 4,5 kHz liegt und die Bandbreite zwischen 3 und 10 kHz variiert, vorzugsweise jedoch 6 kHz beträgt.

Auf der Empfangsseite, d.h. in der Auswerteelektronik wird das vom Seil abgenommene Signal in beiden Varianten steilflankig banbegrenzt verstärkt, um das Signal-Rausch-Verhältnis zu verbessern, frequenz-spannungs-konvertiert und einen Spannungsmeßsystem bzw. einer Recheneinheit zugeführt.

Der Auswerteelektronik können gemäß einem weiteren erfindungsgemäßen Merkmal von zumindest einem weiteren, Sensor Signale zugeleitet werden, welche der jeweiligen Grabungstiefe proportional sind.

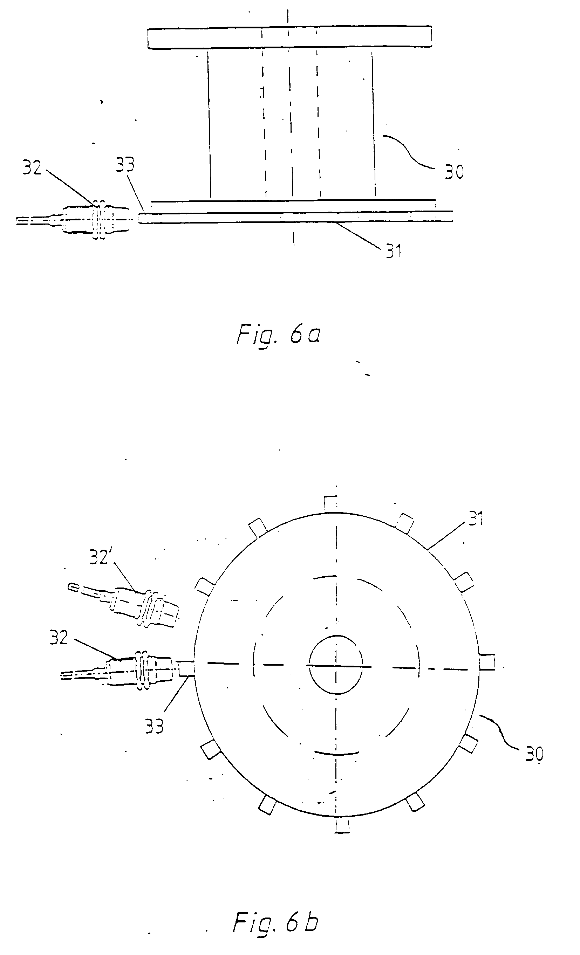

In dem Biespiel des Schlitzwandbaggers mit seilgetragenem und -betätigtem Greifer 1 kann die Messung der zu jedem Neigungsmeßwert gehörigen Schachttiefe durch die Zählung der Umdrehungen jener Drahtseiltrommel, welche zur Absenkung des Greifers dient, erfolgen. Ein vorteilhaftes Ausführungsbeispiel ist dafür in Fig. 6a und 6b dargestellt.

Über einen etwa an der Wange der Trommel 30 befindlichen oder auch nachträglich angebrachten Zahnkranz 31 wird zumindest ein induktiver Näherungsschalter 32 betätigt, da beim Vorbeistreichen eines Zahnes 33 jeweils eine Impuls abgibt. Vorzugsweise sind zwei Schalter 32 angebracht und deren Abstand sowie der Zahnabstand derart bemessen, daß in einer Vorwärts-Rückwärts-Zählschaltung der Auswerteelektronik sowohl die Auswahl als auch die Richtung der Drehung der Seiltrommel 30 bestimmt werden kann.

Der Einfluß der unterschiedlichen Seillagenanzahl auf die Tiefenauswertung kann a priori durch geeignete Programmierung oder Auslegung der Schaltung berücksichtigt oder durch empirische Ermittlung, d.h. einmaliges Ausfahren des Seiles über die gesamte Länge und Anlegen bzw. Abspeichern einer Zählimpuls-Längen-Tabelle oder -Funktion, erhalten werden. Der Bezugspunkt für die Berechnung der Grabungstiefe ist vorzugsweise beliebig festsetzbar, da ansonsten die Auslegehöhe unnötigerweise miteinbezogen wäre und rechnerisch korrigiert werden müßte.

Somit kann in der Auswerteelektronik die Abweichung der Grabung vom Lot in Abhängigkeit von der Schachttiefe berechnet und angezeigt, sowie gespeichert oder graphisch dargestellt werden. Auch der Verlauf des Schachtes kann durch Integration der Neigungswerte über den Weg berechnet und dokumentiert werden.

Fig. 7 zeigt ein Blockschema des gesamten Meßsystems zur Erfassung der Neigung von Grabungen in Abhängigkeit von der Grabungstiefe. Die Systemteile innerhalb des Gehäuses 10 sind zu einem Block 100 der Meßelektronik zusammengefaßt, die zusammen mit der Spule S1 am Grabwerkzeug 1 befestig sind. Block 200 kennzeichnet die Auswerteelektronik mit den Untersystemen 210 für die Neigungswertberechnung und -Anzeige auf der Anzeige 211, sowie 220 für die Ermittlung der Grabungstiefe über die Schalter 32, allenfalls mit selbständiger Anzeige 221.

Selbstverständlich sind im Rahmen der Erfindung vierlerlei Abänderungen und Varianten möglich. Je nach der möglichen bzw. gewählten Bandbreite für die Übertragungsfrequenz können ein oder auch mehrere Übertragungskanäle in diesem Frequenzband untergebracht werden. Damit besteht dir Möglichkeit, mehrere Sensorwerte vom Greifer 1, oder allgemein dem Grabwerkzeug, in den Führerstand zu übermitteln, gleich ob dies ein zweiter Winkel, die Bodentemperatur, Bodenfeuchte etc. ist.

Weiters wäre anstelle der Messung der Umdrehungen der Seiltrommel zur Ermittlung der Grabungstiefe durch induktive Näherungsschalter auch der Einsatz von mechanischen Kontakten oder vorteilhafterweise, da ebenfalls berührungslos, von Lichtschranken denkbar.

Die letztere Meßmethode ist z.B. auch für Bagger oder ähnliche Grabgeräte von Bedeutung, bei welchen das Grabwerkzeug nicht von Drahtseilen getragen und betätigt wird, sondern bei welchen als Verbindungselemente ein oder mehrere Gestänge vorhanden sind. Damit ist das erfindungsgemäße Meßsystem und -verfahren sowohl auf reine Draht- oder Stahlseil-Betätigung, auf reine Gestänge-Betätigung als auch auf kombinierte Seil-Gestänge-Systeme anwendbar, solange zumindest ein geschlossener Stromkreis zwischen Bagger und Grabwerkzeug besteht. Ein weiterer Vorteil ist darin zu sehen, daß die Seile oder Gestänge nacht elektrisch isoliert sein müssen, um eine Signalübertragung zu ermöglichen, was den Materialaufwand wieder reduziert.

Schließlich sind auch Grabgeräte mit nur einem Verbindungselement dadurch leicht mit dem erfindungsgemäßen System nachrüstbar, da die vorhandenen Elemente nicht isoliert werden müssen und zur Herstellung eines geschlossenen Stromkreises das Anbringen eines einfachen Kabels zwischen Grabwerkzeug und Grundgerät ausreicht.

## Patentansprüche

1. Verfahren zur Erfassung der Neigung von Grabungen gegenüber dem Lot in Abhängigkeit von der Grabungstiefe, insbesondere für Schlitzwände, mit einem Grabwerkzeug, das über ein oder mehrere Verbindungselemente, biespielsweise Drahtseile oder Gestänge, beweglich mit einem Grundgerät verbunden ist, wobei zur Messung der Neigung ein herkömmlicher Winkel- oder Inklinationssensor verwendet wird, der ein der momentanen Neigung proportionales Ausgangssignal liefert, dadurch gekennzeichnet, daß der besagte Sensor zusammen mit einer elektronischen Schaltung zur Erzeugung eines Hochfrequenzsignals stoßgeschützt am Grabwerkzeug befestigt wird, wobei während der Grabungsarbeiten ein hochfrequentes Signal mit einer dem Ausgangssignal des Sensors proportionalen Frequenz erzeugt und einer Spule zugeleitet wird, welche eines der Verbindungselemente, wie beispielsweise das Trag- oder Betätigungsseil des Grabwerkzeuges, zwischen Grabwerkzeug und Grundgerät umfaßt, sodaß das Hochfrequenzsignal berührungslos in das Verbindungselement eingespeist wird, daß das Signal von einer zweiten Spule, die das von der ersten Spule umfaßte Verbindungselement ebenfalls umfaßt, in gleicher Weise berührungslos abgenommen und einer Auswerteelektronik zugeleitet und wieder in einen, die Neigung des Grabwerkzeuges repräsentierenden Spannungswert umgewandelt und analog und/oder digital angezeigt wird.

2. Verfahren nach Anspruch 1, dadurch gekennzeichnet, daß die Frequenz des Signals zwischen 500 Hz und 35 kHz liegt, mit einer Bandbreite zwischen 3 und 10 kHz, wobei die Mittenfrequenz vorzugsweise bei etwa 4,5 kHz liegt und die Bandbreite vorzugsweise 6 kHz beträgt.

3. Verfahren nach Anspruch 1, dadurch gekennzeichnet, daß der Auswerteelektronik von zumindest einem weiteren Sensor Signale zugeleitet werden, welche der jeweiligen ausgefahrenen Länge des oder der Verbindungselemente und damit auch der Grabungstiefe proportional sind.

4. Verfahren nach Anspruch 3, dadurch gekennzeichnet, daß der Bezugspunkt für die Berechnung der Grabungstiefe beliebig festsetzbar ist.

5. Verfahren nach Anspruch 3, wobei die besagten Signale die Bewegungen einer Seiltrommel für das Tragseil des Grabwerkzeuges repräsentieren, dadurch gekennzeichnet, daß die unterschiedliche Anzahl der Seillagen auf der Seiltrommel und damit die Änderung des Proportionalfaktors zwischen Signal und Seillänge in der Auswerteelektronik korrigiert wird.

6. Meßsystem zur Erfassung der Neigung von Grabungen gegenüber dem Lot in Abhängigkeit von der Grabungstiefe, insbesondere für Schlitzwände, in Verbindung mit einem Grabwerkzeug, das über ein oder mehrere Verbindungselemente, beispielsweise Drahtseile oder Gestänge, beweglich mit einem Grundgerät verbunden ist, wobei das Meßsystem zumindest einen herkömmlichen Winkel- oder Inklinationssensor und eine Auswerteelektronik mit einer analogen und/oder digitalen Anzeige, allenfalls mit einer Speichereinrichtung, umfaßt, dadurch gekennzeichnet, daß der oder die besagten Sensoren zusammen mit einer elektronischen Schaltung (100), die ein hochfrequentes Signal mit einer dem neigungsproportionalen Ausgangssignal des Sensors proportionalen Frequenz erzeugt, in einem druckfesten und wasserdichten Gehäuse (10) stoßgeschützt eingebaut sind und das Gehäuse (10) direkt am Grabwerkzeug (1) montiert ist, daß am oder im Grabwerkzeug eine mit der elektronischen Schaltung verbundene und eines der Verbindungselemente (5,6) umfassende Spule (S1,S2) angebracht ist, welcher das Hochfrequenzsignal zugeleitet wird, daß am Grundgerät eine zweite Spule (S2) zur Abnahme des über das Verbindungselement (5,6) übertragenen Hochfrequenzsignals vorgesehen ist, die das von der ersten Spule (S1) umfaßte Verbindungselement (5,6) ebenfalls umfaßt und mit einer Auswerteelektronik (200), vorzugsweise im Führerhaus des Grundgerätes angeordnet, verbunden ist, in der das in der Spule (S2) induzierte neigungsproportionale Hochfrequenzsignal in einen Spannungswert umgewandelt und auf der Anzeige (211) ausgegeben wird.

7. System nach Anspruch 6, dadurch gekennzeichnet, daß das Verbindungselement (5,6) direkt durch die Spulenanordnung (S1') verläuft und die Längsachsen des Elementes (5,6) und der Spulen (S1') im wesentlichen übereinstimmen.

8. System nach Anspruch 6, dadurch gekennzeichnet, daß die Spulen (S1,S2) um Ringkerne (21,22), vorzugsweise aus ferromagnetischem Material, gewickelt sind, welche die Verbindungselemente (5,6) umfassen.

9. System nach Anspruch 7 oder 8, dadurch gekennzeichnet, daß die Spulen (S1,S1',S2) über elastische Elemente, beispielsweise Spiralfedern (24), am Grabwerkzeug (1) und am Grundgerät befestigt sind.

10. System nach Anspruch 7 oder 8, dadurch gekennzeichnet, daß zum mechanischen Schutz der Spulen Umhüllungen und/oder Spulenkörper (23), vorzugsweise aus Polyamid- oder Polyolefin-Kunststoffen, vorgesehen sind.

11. System nach Anspruch 6, dadurch gekennzeichnet, daß zumindest ein weiterer Sensor (32) am Grundgerät vorgesehen ist, der ebenfalls mit der Auswerteelektronik (200) verbunden ist, und Signale liefert, die der jeweiligen ausgefahrenen Länge des oder der Verbindungselemente (5,6) und damit der Grabungstiefe proportional sind.

12. System nach Anspruch 11, wobei sich am Grundgerät eine Seiltrommel (300) für das Tragseil (5) befindet, dadurch gekennzeichnet, daß der besagte Sensor (32) ein induktiver Näherungsschalter ist, der bei Vorbeistreichen jeweils eines Vorsprunges (33) eines an der Seiltrommel befindlichen oder nachträglich angebrachten Zahnkranzes (31) oder ähnlichem einen Impuls abgibt.

13. System nach Anspruch 12, dadurch gekennzeichnet, daß ein zweiter Näherungsschalter (32') vorgesehen ist, wodurch die Bestimmung der Drehrichtung der Seiltrommel ermöglicht wird.

## Claims

1. A method of determining the inclination of excavations in relation to the vertical as a function of the excavation depth, in particular for channel walls, using an excavating tool which is movably connected to a basic machine by means of one or more connecting elements, for example cables or rods, wherein a conventional angle or inclination sensor which supplies an output signal proportional to the present inclination is used to measure the inclination, characterised in that the said sensor together with an electronic circuit for generating a high-frequency signal is secured to the excavating tool so as to be protected from impact, a high-frequency signal with a frequency proportional to the output signal of the sensor being generated during the excavating work and fed to a coil which surrounds one of the connecting elements, such as the carrying or operating cable of the excavating tool, between the excavating tool and the basic machine so that the high-frequency signal is fed into the connecting element in a non-contacting manner, and in that the signal from a second coil, which also surrounds the connecting element surrounded by the first coil, is received in a non-contacting manner in the same way and fed to an electronic evaluation unit and again converted into a stress value representing the inclination of the excavating tool and displayed by analogue and/or digital means.

2. A method according to claim 1, characterised in that the frequency of the signal is between 500 Hz and 35 kHz with a band width between 3 and 10 kHz, the centre frequency preferably being approximately 4.5 kHz and the band width preferably 6kHz.

3. A method according to claim 1, characterised in that signals are fed to the electronic evaluation unit from at least one further sensor, the said signals being proportional to the actual extended length of the connecting element or elements and thereby also to the excavation depth.

4. A method according to claim 3, characterised in that the reference point for calculating the excavation depth can be arbitrarily fixed.

5. A method according to claim 3, wherein the said signals represent the movements of a cable drum for the carrying cable of the excavating tool, characterised in that the varying number of cable layers on the cable drum and thereby the alteration in the proportional factor between the signal and the cable length is corrected in the electronic evaluation unit.

6. A measuring system for determining the inclination of excavations in relation to the vertical as a function of the excavation depth, in particular for channel walls, in conjunction with an excavating tool which is movably connected to a basic machine by means of one or more connecting elements, for example cables or rods, wherein the measuring system comprises at least one conventional angle or inclination sensor and an electronic evaluation unit with an analogue and/or digital display, if necessary with a memory unit, characterised in that the said sensor or sensors together with an electronic circuit (100), which generates a high-frequency signal with a frequency proportional to the sensor output signal proportional to the inclination, are installed in a pressure-resistant and water-tight housing (10) so as to be protected from impact and the housing (10) is mounted directly on the excavating tool (1), in that a coil (S1, S2), to which the high-frequency signal is fed, is provided on or in the excavating tool, is connected to the electronic circuit and surrounds one of the connecting elements (5, 6), and in that a second coil (S2) for receiving the high-frequency signal transmitted by the connecting element (5, 6) is provided on the basic machine, likewise surrounds the connecting element (5, 6) surrounded by the first coil (S1) and is connected to an electronic evaluation unit (200) - preferably arranged in the driver's cab of the basic machine - in which the high-frequency signal proportional to the inclination and induced in the coil (S2) is converted into a stress value and output on the display (211).

7. A system according to claim 6, characterised in that the connecting element (5, 6) extends directly through the coil arrangement (S1') and the longitudinal axes of the element (5, 6) and the coils (S1') substantially correspond.

8. A system according to claim 6, characterised in that the coils (S1, S2) are wound round ring cores (21, 22), preferably made of ferromagnetic material, which surround the connecting elements (5, 6).

9. A system according to claim 7 or 8, characterised in that the coils (S1, S1', S2) are secured to the excavating tool (1) and the basic machine via resilient elements, for example helical springs (24).

10. A system according to claim 7 or 8, characterised in that coverings and/or coil formers (23), preferably made of polyamide or polyolefin synthetics, are provided for the mechanical protection of the coils.

11. A system according to claim 6, characterised in that at least one further sensor (32) is provided on the basic machine, is also connected to the electronic evaluation unit (200) and supplies signals which are proportional to the actual extended length of the connecting element or elements (5, 6) and thereby the excavation depth.

12. A system according to claim 11, wherein a cable drum (300) for the carrying cable (5) is located on the basic machine, characterised in that the said sensor (32) is an inductive proximity switch which emits a pulse each time a projection (33) of a toothed rim (31) or the like located on the cable drum or subsequently mounted thereon passes by.

13. A system according to claim 12, characterised in that a second proximity switch (32') is provided, by means of which it is possible to determine the direction of rotation of the cable drum.

## Revendications

1. Procédé destiné à enregistrer la pente d'excavation par rapport à la verticale, en fonction de la profondeur d'excavation, en particulier pour des parois moulées dans le sol, avec un outil de fouille, qui est relié mobile avec un engin de base, par un ou plusieurs éléments de liaison, par exemple des câbles métalliques ou une tringlerie, dans lequel est utilisé pour mesurer la pente un capteur classique d'angle ou d'inclinaison, qui fournit un signal de sortie proportionnel à l'inclinaison instantanée, caractérisé en ce que ce capteur est fixé sur l'outil de fouille, de manière protégée contre les chocs, avec un circuit électronique destiné à produire un signal à haute fréquence, pendant les travaux de fouille un signal à haute fréquence étant produit à une fréquence proportionnelle au signal de sortie du capteur et envoyé à une bobine, qui comprend l'un des éléments de liaison, par exemple le câble de support ou d'actionnement de l'outil de fouille, entre l'outil de fouille et l'engin de base, ce qui fait que le signal à haute fréquence est envoyé sans contact dans l'élément de liaison, en ce que le signal est repris, de la même manière, sans contact, par une deuxième bobine qui comprend aussi l'élément de liaison compris par la première bobine et est envoyé à un dispositif électronique d'exploitation et converti à nouveau en une valeur de tension, représentant la pente de l'outil de fouille et affiché de manière analogique et/ou numérique.

2. Procédé selon la revendication 1, caractérisé en ce que la fréquence du signal se situe entre 500 Hz et 35 kHz, avec une largeur de bande comprise entre 3 et 10 kHz, la fréquence moyenne étant de préférence égale à 4,5 kHz environ et la largeur de bande de préférence à 6 kHz.

3. Procédé selon la revendication 1, caractérisé en ce que le dispositif électronique d'exploitation reçoit, d'au moins un autre capteur, des signaux qui sont proportionnels à la longueur ressortie respective du ou des élément(s) de liaison et donc aussi à la profondeur de l'excavation.

4. Procédé selon la revendication 3, caractérisé en ce que le point de référence pour le calcul de la profondeur de l'excavation peut être fixé à volonté.

5. Procédé selon la revendication 3, dans lequel lesdits signaux représentent les déplacements d'un tambour de câble pour le câble de support de l'outil de fouille, caractérisé en ce que le nombre différent de couches de câbles sur le tambour et donc la variation du facteur proportionnel entre le signal et la longueur du câble est corrigé dans le dispositif électronique d'exploitation.

6. Système de mesure destiné à enregistrer la pente d'excavation par rapport à la verticale, en fonction de la profondeur d'excavation, en particulier pour parois moulées dans le sol, en liaison avec un outil de fouille qui est relié mobile avec un engin de base, par un ou plusieurs éléments de liaison, par exemple des câbles métalliques ou une tringlerie, le système de mesure comprenant un capteur classique d'angle ou d'inclinaison et un dispositif électronique d'exploitation avec un affichage analogique et/ou numérique, en tout cas avec un dispositif de mémoire, caractérisé en ce que le ou les capteur(s) est ou sont monté(s), de manière protégée contre les chocs, avec un circuit électronique (100), qui produit un signal à haute fréquence à une fréquence proportionnel au signal de sortie, proportionnelle à la pente, du capteur, dans un boîtier (10) résistant à la pression et étanche à l'eau et le boîtier (10) est directement monté sur l'outil de fouille (1), en ce que sur ou dans l'outil de fouille est placée une bobine (S1, S2) reliée au circuit électronique et comprenant l'un des éléments de liaison (5, 6), bobine à laquelle est envoyé le signal à haute fréquence, en ce que sur l'engin de base est prévue une deuxième bobine (S2) destinée à reprendre le signal à haute fréquence transmis par l'élément de liaison (5, 6), qui comprend aussi l'élément de liaison (5, 6) compris par la première bobine et qui est reliée avec un dispositif électronique d'exploitation (200), de préférence monté dans la cabine de pilotage de l'engin de base, dispositif électronique dans lequel le signal à haute fréquence, proportionnel à la pente, induit dans la bobine (S2), est converti en une valeur de tension et délivré à l'affichage (211).

7. Système selon la revendication 6, caractérisé en ce que l'élément de liaison (5, 6) passe directement par le dispositif à bobines (S1') et en ce que les axes longitudinaux de l'élément (5, 6) et des bobines (S1') coïncident pour l'essentiel.

8. Système selon la revendication 6, caractérisé en ce que les bobines (S1, S2) sont enroulées autour de noyaux annulaires (21, 22), de préférence en matériau ferromagnétique, qui comprennent les éléments de liaison (5, 6).

9. Système selon les revendications 7 ou 8, caractérisé en ce que les bobines (S1, S1', S2) sont fixées sur l'outil de fouille (1) et sur l'engin de base, par des éléments élastiques, par exemple des ressorts spiraux (24).

10. Système selon les revendications 7 ou 8, caractérisé en ce que pour la protection mécanique des bobines il est prévu des enveloppes et/ou des corps de bobine (23), de préférence en matière plastique à base de polyamide ou de polyoléfine.

11. Système selon la revendication 6, caractérisé en ce qu'il est prévu au moins un autre capteur (32) sur l'engin de base, qui est également relié avec le dispositif électronique d'exploitation (200) et qui fournit des signaux qui sont proportionnels à la longueur ressortie respective du ou des élément(s) de liaison (5, 6) et donc à la profondeur d'excavation.

12. Système selon la revendication 11 dans lequel un tambour de câble (300) pour le câble de support (5) se trouve sur l'engin de base, caractérisé en ce que ledit capteur (32) est un interrupteur de proximité inductif, qui délivre une impulsion lorsque passe une partie saillante (33) d'une couronne dentée (31), se trouvant ou montée ultérieurement sur le tambour de câble.

13. Système selon la revendication 12, caractérisé en ce qu'il est prévu un deuxième interrupteur de proximité (32') permettant de déterminer le sens de rotation du tambour de câble.
